# EUROPEAN PATENT SPECIFICATION

(11) **EP 1 056 262 B1**
(45) Date of publication and mention of the grant of the patent: **30.01.2008**
(21) Application number: 00650058.1
(22) Date of filing: 25.05.2000
(51) Int. Cl.: H04M 3/22, H04M 3/36, H04M 15/00

(54) **A system for monitoring a communication network**
Netzwerküberwachungssystem
Systeme de surveillance d'un reseau de communications

(30) Priority: 25.05.1999 IE 990420
(43) Date of publication of application: 29.11.2000
(73) Proprietor: LM Ericsson Limited, Dublin 4 (IE)
(72) Inventor: Leahy, Eoin, Rialto, Dublin 8 (IE); Healy, Paul, Clontarf, Dublin 3 (IE)
(74) Representative: O'Connor, Donal Henry

(56) References cited:
- EP-A- 0 653 868
- EP-A- 0 743 778
- US-A- 5 627 886

## Description

### Introduction

The present invention relates to a system for monitoring a communications network and in particular for examining caller profiles so as to provide call statistics which will identify telecommunications activity of one or a group of callers.

The invention is directed towards providing such a monitoring or processing system to provide profiles of callers which will allow the telecommunications operator manage the system for optimum revenue. Heretofore monitoring has been almost solely directed towards fraud prevention, or the collection of revenues.

The prior art is almost totally directed to fraud detection systems which have been developed whereby when a customer becomes a bad debt the customer is entered into the database with a list of the most frequently called numbers by that customer. Should that customer set up a different account under a different alias the system should detect that account as an account for the number of a bad debtor as the debtor invariably calls the same number. A message is sent to the telecommunications company when the degree of similarity of the calling characteristics of the two accounts meet predetermined criteria. PCT Patent specification No. WO 94/23528 (British Telecommunications PLC) is a typical example of the systems used for fraud prevention.

However, there are problems with existing systems, the computational overhead in comparing a potential bad debtor with all the other users in a system places a burden on the traffic in the telecommunication network. Present systems also do not build up enough of a profile of characteristics of a customer to be sure whether a customer is a possible fraudster or not while the implementation of such systems on different telecommunication networks has to be customised for each individual network. For instance, if a network operator could identify those callers which use the Internet service then it might be possible for the network operator to provide Internet related services to such customers. None of the present systems have been particularly successful at solving the aforementioned problems. Again reference can be made to another PCT Patent Specification No. WO96/31043 (British Telecommunications PLC) which discloses another method and system for detecting possible fraudulent use of a telecommunication network. Call event records are examined. A record has a number of key fields e.g. calling number, calling card number and so on. This application shows a very elaborate system of fraud prevention, which would apparently take up a considerable amount of computational time and effort of the network.

European Patent EP-A-0 653 868 (AT & T Corp) deals with a system for detecting and preventing fraudulent use of a telecommunications network. It discloses a system whereby calls are analysed in real time to detect fraud. Characteristics of each call are sent to a control system for analysis and comparison with a predefined set of rules. The rules are devised to identify differing levels of fraud with varying degrees of certainty. This application would also seem to disclose a system that would take up a relatively significant amount of computational time and effort on the network.

In dealing with such a communications network, it is important to distinguish clearly between a customer and a calling entity. For example, a customer could be a corporate operation having a number of calling entities at a number of locations, or could indeed be a private individual who had a home telephone, a mobile phone, a holiday home telephone and so on. Thus, it is important to make this clear distinction.

The calling entity will therefore have calling entity traits, which calling entity traits are determined by the customer and could also be described as customer traits, however, since the calling entity could have the traits of more than one customer, for example, it could in fact be a family who used a particular calling entity and thus the network operator or manager would be interested in the traits of that sub-group of people who use the calling entity. The term "calling entity trait" is probably a more proper term to use. Thus the calling entity could for example be whether the account was a business account, a domestic account, a student account. It could be very important to have the location of the account, it could be important to know whether it was a new customer and indeed all the demographics of the customer are important in relation to the calling entity.

Similarly, it is important to appreciate that calling entities will fall into various classes of calling entity, namely those calling entities having specific calling entity traits chosen. In turn, any calling entity will have call traits, which call traits are separate to the calling entity traits: while they may be closely linked to it, they are essentially separate. The call traits are the call statistics, as it were, of the particular calling entity, which would be for example, types of calls, international, long distance, and so on, all of which are traits of the actual calling entity in operation. Putting it another way, the calling entity traits are the actual inherent traits of the people or operation using the actual calling entity, while the call traits are the results of the use of that calling entity by those customers having those calling entity traits. The call traits may also be considered as a calling entity trait but never the converse.

In this specification the term "fingerprint" is used to identify the profile of these call traits. In other words, the summation of the actual values of the call traits for a particular calling entity. These can be the actual call traits being the actual value of the call traits recorded for a particular calling entity and thus providing a fingerprint for that calling entity. The words "fingerprint template" are used in this specification to define a list of such call traits, which template may not include all the call traits of a particular calling entity, but could indeed only include one call trait. To a certain degree there is little distinction made between a fingerprint and a fingerprint template.

The present invention is directed towards providing a system for monitoring effectively the customers in a telecommunications network which will allow the network operator to provide additional services to the customer and thus provide added value to the customer improving the attractiveness and overall value of the network to the customer as well as providing information to the operator which will allow the operator to operate the system more efficiently and which will give the operator sufficient statistics and information to ensure that the on-going development of the network can be planned and implemented in the best possible way for the future profitability of the network having regard to the requirements of the customers.

Additionally the present invention is directed towards providing a system for monitoring customers in a telecommunication network which overcomes the problems inherent in the present method of monitoring a telecommunication network.

### Statements of Invention

According to the invention there is provided a method of operating a communications network in response to the usage by a calling entity of the communications network comprises the initial steps of:
preparing a trait database of call traits for calling entities;
dividing the calling entities into a plurality of classes of calling entity;
allocating each calling entity to at least one class of calling entity; and
preparing an entity database of classes of calling entity;
and subsequently:
choosing from the entity database a class of calling entity for monitoring;
choosing at least one of said call traits from the trait database to provide a fingerprint and thus a fingerprint template for the chosen class of calling entity;
compiling at least one fingerprint template from control fingerprints for the chosen class of calling entity;
establishing rules for comparison between the control fingerprint and an actual fingerprint;
using the fingerprint template to provide actual fingerprints for each calling entity within the chosen class of calling entity by recording the call trait of each calling entity within a predetermined period;
comparing the actual fingerprint of each calling entity against the control fingerprint;
determining whether the comparison between the actual and control fingerprints establishes a similarity having regard to the rules for comparison;
preparing a set of similar calling entities based on the similarity established; and
carrying out an appropriate subsequent action when a similarity is established and a set of similar calling entities is provided.

The advantage of this is that by choosing a particular class of calling entity, it is possible to carrying out quite complex investigation and analysis of the calling entities within that class without leading to considerable computational problems. For example, looking at the conventional and well used fraud detection system, one might make as the class of calling entities those entities who are a new customer and have not been connected to the network for longer than 12 months. Then as specific frauds were detected, it would be possible to prepare a control fingerprint from a detected fraud account which control fingerprint would contain the numbers called by that call account, or fraudulent calling entity, which numbers could then be used as conventionally to provide a relatively clear indication of the possibility of fraud. Alternative, for example, it might be done by taking as a class of calling entity such as students owning mobile phones, where there might be a limit placed on the cost of the calls to obviate the problem of bad debts. It will be appreciated that the possibilities are limitless.

It is envisaged that the sets of similar calling entities may be entered into the entity database as a class of calling entity and the steps according to the invention may be carried out on this class of calling entity. The advantage of this is that having discovered a particular similarity between certain calling entities, it may be necessary to carry out further analysis on these calling entities.

In one method according to the invention, the following steps may be carried out:
the control fingerprint is downloaded to a query database;
the actual fingerprint is downloaded to a buffer database;
the databases are compared for determination of similarity; and
the set of similar calling entities is stored on an action consequent database.

The invention allows the query, buffer and action consequent databases to be stored off-line for subsequent processing. It will however be appreciated that the processing may occur in real time depending on the particular analysis and investigation being carried out.

Ideally at least one of the classes of calling entity is based on one or more calling entity trait, which calling entity may be chosen from one or more of:
the calling entity demographics;
account payment history of the calling entity;
the length of time the calling entity has been connected to the communications system; and
whether the calling entity is linked to another calling entity by an identical or similar demographic.

The advantage of this is that any particular trait of a calling entity may be used to provide a class of calling entity which will allow very specific marketing operations to be carried out by very carefully structuring and targeting the actual potential users of a particular service, or the purchase of particular goods, by clearly identifying from some fingerprints the suitability of such a calling entity, or effectively the customers owning that calling entity for that marketing operation.

It is envisaged that the calling entity trait may be re-recorded after some time interval and if the calling entity trait differs from the previously recorded calling entity trait the steps may be performed of:
deleting the previously recorded calling entity trait;
deleting the calling entity from the class of calling entity previously allocated because of the previously recorded calling entity trait; and
re-allocating the calling entity to at least one class of calling entity for that new calling entity trait.

It will be appreciated that by being able to re-examine and re-profile effectively customers that this will further enhance the value of the system making it a dynamic communications network.

It is envisaged that at least one of the classes of calling entity is based on one or more call traits previously recorded for the calling entities forming that class of calling entity. These call traits which can be used for fingerprints or for classifying calling entities may be chosen from, but not restricted to one or more of:-
B number;
prefix;
value;
length;
interval since last call;
operator ID;
fail codes;
zone;
call ID;
calling line identity;
a sub type;
b sub type; and
excluded calls.

Obviously it would not be sufficient to classify calling entities purely by the location of the calling entity or the demographics of the customers, but it may be also important to classify them by actual calling traits. In other words, one family may make numerous international calls and another may not. Thus, it is very important that as well as classifying by inherent call entity traits that the actual call traits and statistics of the customer should be used to provide the necessary classes of calling entity.

In this latter embodiment when a new fingerprint is recorded for a calling entity and if the call trait recorded in that fingerprint differs from the previously recorded call trait, the steps may be performed of:-
substituting the new call trait recorded for the previously recorded call trait;
deleting the call entity from the class of calling entity previously allocated to because of said previously recorded call trait; and
re-allocating the call entity to at least one class of calling entity for that new call trait.

Clearly this will be done after pre-set times so that if a calling entity changes its calling pattern this will be identified by the network operator, who will then possibly carry out different steps according to the invention in respect of that calling entity.

According to the invention the control fingerprint is chosen by recording the call traits of another calling entity. It may be by recording the call traits of a plurality of other calling entities and averaging each call trait to provide a control call trait for the control fingerprint.

In one method according to the invention a unique control fingerprint may be chosen for each call entity, said control fingerprint being an actual fingerprint previously recorded for the same call entity, or, alternatively the control fingerprint may be chosen by an arbitrary selection of the call trait.

For fraud as in the past the control fingerprint may be the most frequently called numbers of a previous fraudulent customer. The control fingerprint as explained could be for marketing purposes and then you might be more interested in determining those customers with a large number of international calls, or it may be as explained above that one wishes to detect traits in the way in which a calling entity is using the network services, or may just simply be an arbitrary selection. For example, as pointed out above, one might wish to know those customers spending more than a certain sum of money on a particular service provided by the network.

Any appropriate subsequent operation may be carried out such as preventing the calling entity from using the communications network to connect with specified calling entities or from using the communications network to connect with any other calling entity, or indeed as in many instances it may entail the downloading of messages to the calling entity. This could be for example marketing and other messages.

### Detailed Description of the Invention

The invention will be more clearly understood from the following description of some embodiments thereof given by way of example only described with reference to the accompanying drawings in which:-
Fig. 1 is a basic flow diagram of the method according to the present invention; and
Fig. 2 shows a specification of the diagram which would be part of the description of the system which would be seen by a user, for example when the user was attempting to discover fraud.

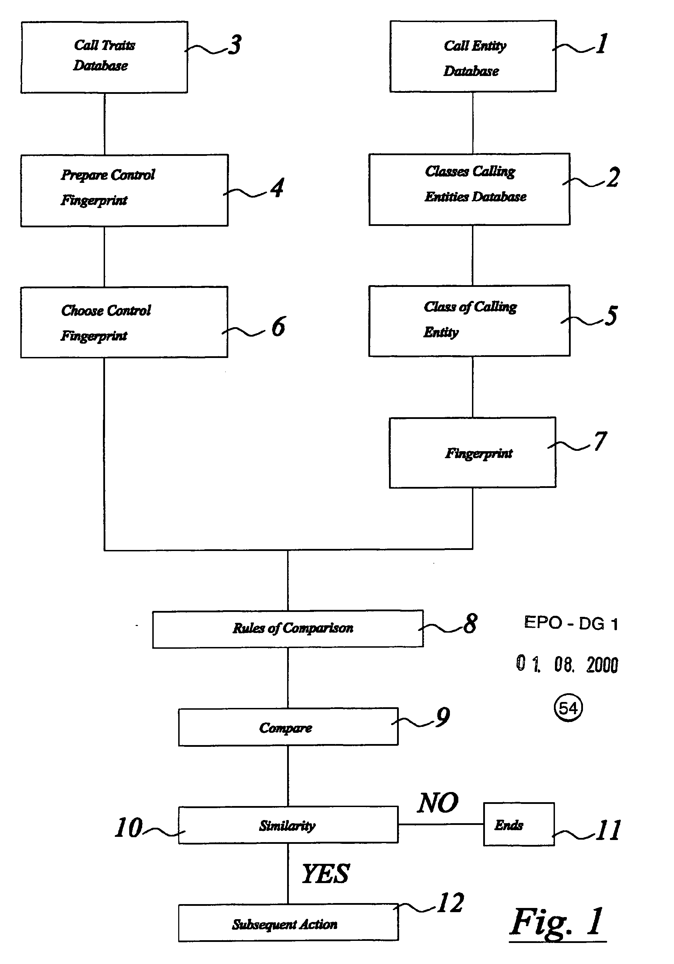

Referring to the drawings and initially to Fig. 1 in step 1 a database of calling entities is provided. For ease of reference both the step of creation or action and the result such as a database are for ease identified by the same reference numeral. It should be noted that just because step 1 is numbered before for example step 3 does not mean it occurs before that step. This calling entity database 1 will include as much information as the network provider considers necessary to provide in the database which will initially relate to customer characteristics. It could include, for example, customer or more properly calling entity demographics, account payment history of the calling entity, the length of time the calling entity has been connected to the communications system and whether the calling entity is linked to another calling entity by an identical or similar demographics. It will be appreciated that demographic could be of the calling entity of a business customer, a private individual, a state run operation, a government office and so on. Similarly it could include the location of the calling entity, it could include whether the customer had additional calling entities so as to link the calling entities together. Thus, for example, there might be information which stated that the calling entity was in fact billed to a customer who also had a mobile phone and further the people living at that location also had mobile phones which calling entities would again be linked in this calling entity database. It is limitless the number and amount of information that can be provided for any particular calling entity, which information can be updated from time to time.

In step 2 a database of classes of calling entities, namely a calling entity database 2 is provided. Again using the demographics and other information provided there could be for example a database of all those calling entities which are linked to at least one other calling entity. There could be a set or class in the database of business calling entities and so on. All these are provided in step 2.

Almost certainly simultaneously if not earlier, in step 3 a database of call traits is provided. This database of call traits could be any traits that the network operator or manager wish to provide. It could for example be numbers, prefixes, value, length of call, interval since last call, operator ID, fail codes, zones called, call ID, calling line identity, a sub type (for exclusion purposes probably), b sub type (again for exclusion purposes probably) or indeed it could be call traits that are calls which are to be ignored. For example, it might be decided that one would never measure certain numbers used, or call traits of a particular entity. At the same time they are recordable.

In step 4 various control fingerprints in the form of call trait fingerprint templates would be provided which would include one or more call traits. How it is provided will be described in more detail below, but simply for illustrative purposes, it could for example be the numbers of a previously fraudulent caller as in the prior art, or it could be for example the value of the particular account paid each month and so on.

In step 5 a particular class of calling entity will be chosen for analysis and control and in step 6 a suitable control fingerprint template will be provided again from previously prepared fingerprints.

In step 7 a fingerprint template identical to the control template is provided for each of the calling entities within the class of calling entity. In step 8 rules of comparison are determined by the operator or manager. For example, it could be that if there was absolute identity between the control fingerprint and the actual fingerprint sensed for a particular calling entity, that this would be considered a similarity, with any variance from absolute similarity being considered in the same way as total dissimilarity. Alternatively, it might, for example, have rules which gave a similarity depending on certain ranges of the parameters chosen. The types of rules of comparison are limitless and will be easily devised depending on the purpose of the operation. It is purely a statistical function.

In step 9 the two fingerprints are compared and in step 10 the similarity between one of the actual fingerprints of a calling entity and the control template is considered then either there is no similarity and therefore no further action takes place and in step 11 it ends, or alternative in step 10 there has been similarity and in step 12 a suitable control is carried out.

The control fingerprint template and the actual fingerprint template would normally consist of more than one call trait being measured, but in fact all that is needed is one call trait to be measured. It will be appreciated that for example for fraud detection, the class of calling entity chosen would probably be one which was a new customer and this would be the calling entity trait that would determine the class of calling entity being examined and controlled.

While it has been suggested that the calling entity trait would be based on such features as calling entity demographics and other data such as, for example, the fact that the calling entity is linked to another calling entity by an identical or similar demographic, it also will be appreciated that the calling entity trait could in fact be linked to some call trait. For example, one might wish to classify calling entities by expenditure, by the number of international calls and so on.

It is also envisaged that when a comparison shows up a similarity between certain calling entities within a class of calling entities that these sets of similar calling entities could be entered into the calling entity database as a class of calling entity and the steps according to the invention will then be carried out on this class of calling entity. It will obviously be appreciated that the use of databases will be one of the easiest ways of carrying out the invention and thus in many instances this will be the way in which the invention is carried out. For example, a control fingerprint can be downloaded to a query database, the actual fingerprint could then be downloaded to a buffer database, the two databases could be compared for determination of similarity and then the set of similar calling entities would be stored on an action consequent database. The type of action that would then be carried out could be any of a multiplicity of actions, the list is endless being determined by operator requirements. For example, it might just simply be the cutting off of the calling entity from using the communications network, or preventing the calling entity from using the communications network to connect with specified calling entities such as, for example, certain leased lines. One could imagine a situation where a school would be a class of calling entity which it would be deemed inappropriate to connect to certain services and thus they might wish to check if such calls were being made. Similarly, it might just be that the network operator is willing to take the possibility of not being paid for local calls, but would not be willing to take the charges for long distance or international calls and thus international calls could be barred. Alternatively it could be nothing to do with the operation of the network.

The marketing opportunities will be easily appreciate. For example, the following situation could arise. A particular service such as a restaurant might be newly established in a particular area, the proprietors of that restaurant might wish to attract people to dine in it. It would hardly be focussed marketing for that restaurant to send an offer of a free meal to everybody within a particular location. What the restaurant would wish to do is to send an offer to those people who dine out regularly at similar restaurants within that particular area. The network operator could then prepare a control fingerprint, which control fingerprint would give the numbers of all the local restaurants, i.e. the telephone numbers of the calling entities corresponding to those local restaurants and then that could form the control fingerprint. Then the class of calling entity that would be prepared would probably be in the first instance geographically limited, though the calling entities that it is desired to examine could be chosen by some other criteria. However, presuming that the network operator now had in the one class of calling entity all calling entities within a two mile radius of the restaurant and similarly had as the control fingerprint the numbers of the local restaurants, then it would be a simple matter to compare this control fingerprint with the fingerprint of the actual calls of the chosen class of calling entity over a specific period of time. It would then be possible for the restaurant to contact directly those customers using those calling entities who would be likely to be potential customers of the restaurant and then make an offer of, for example, a totally free meal and wine for two, which offer almost would be taken up, and would have a much better chance of leading to repeat visits than an offer made by a more blanket marketing approach. It will be appreciated that there are many other ways in which active marketing could be achieved.

It is also envisaged that not alone will the calling entity traits be re-recorded after some time interval, but also that if the calling entity trait differs from the previously recorded calling entity trait that this could lead to the new calling entity trait being recorded. The previously calling entity trait deleted and possibly the allocation of the calling entity to different classes of calling entity.

It is also envisaged that the subsequent processing can be done on-line or off-line in real time, it is entirely dependent on the particular control function required. For example, for fraud and the like, one would obviously need to do certain investigations and control on-line while for other situations off-line would be perfectly acceptable.

In dealing with control fingerprints, while the call traits that are used are limitless, it could for example be all the traits previously described, but these are not the only traits that could be used. Again it will be appreciated that the call traits might be, for example, the call traits of the average of a number traits. For example, a network might be interested to find out what was the average number of international calls made by a certain class of calling entity and then to use that as a call trait, which call trait would provide a control fingerprint which could then be used to analyse the actual fingerprints of that class of calling entity to identity those that were or were not using the particular international call service.

While it is anticipated the act of finding a fingerprint will be quite complicated initially, where that fingerprint is based on the call traits of other calling entities, it will be appreciated that since the calling entities are divided into classes of calling entity and the fingerprint is in some way related to that or another class of calling entity that the computational problems will not be as great as heretofore. An example of this would be a control fingerprint for fraud detection and the fingerprint would be set up by examining the call traits of a previously identified fraudulent calling entity, then those call traits could be used to provide the control fingerprint and if the class of calling entity was taken from those recently connected into the communications network the computational problems would be considerably reduced. Also, when in accordance with the present invention, the computation and analysis can be done off-line, the problems are greatly reduced.

It will also be appreciated than when one is matching a control fingerprint with an actual fingerprint that it may or may not be an identical match, but may be on the basis of certain statistics. It will be possible to create any form of fingerprint for a particular calling entity that is desired and that fingerprint can be stored for subsequent retrieval. It is also envisaged that one could merge two fingerprints into a new fingerprint and that various data could be provided for the fingerprint such as, a unique tab, for identification purposes, the user name of the operator person who created it and so on.

Similarly a search can be carried out in many ways - off-line, on-line for specified lengths of time and so on. Similarly the search parameters can be specified so the priority of when your search will be run e.g. quickly, slowly, can easily be provided.

It is also envisaged in accordance with present invention that an upper boundary on how long a search can take place, for example, simple clock time can be used. Similarly the amount of computational time for example in the CPU seconds can also be specified for a search.

As has been mentioned in relation to fraud above, it will be appreciated that, for example, it would be relatively easy to be alerted to a possible problem before actually taking action.

A further point to be appreciated is that a calling entity may belong to various classes of calling entity and it is not necessary to put a complete group of calling entities into the one class of calling entity. Thus, a calling entity might be a corporation making a lot of data calls out of normal time and thus falling into one class of calling entity and it similarly might be in a class of calling entity which was related to a large number of mobile calling entities.

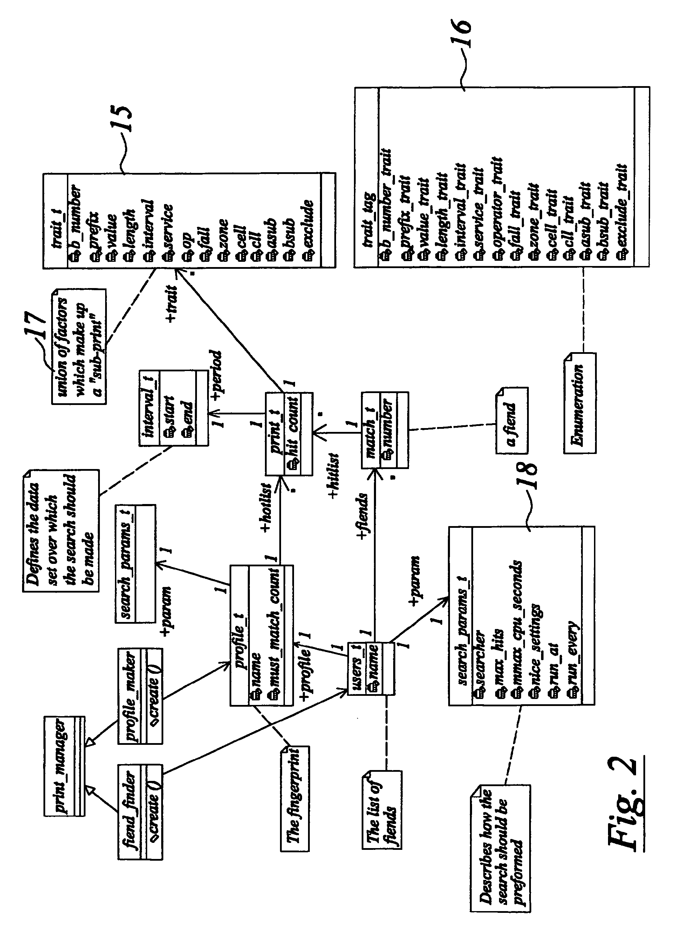

Referring now to Fig. 2 there is illustrated one specification diagram of an external view of the system as it would be seen by clients of the system. At 15 there is shown a list of call traits and 16 shows the call traits with a suitable identification tag, 17 shows what could be a number of call traits that would be chosen to make a control template, 18 shows search parameters and the remainder can be relatively easily seen and understood from the drawings.

In the specification the terms "comprise", "comprises", "comprised" and "comprising" or any variation thereof and the terms "include", "includes", "included" and "including" or any variation thereof are considered to be totally interchangeable and they should all be afforded the widest possible interpretation and vice versa.

The invention is not limited to the embodiments hereinbefore described but may be varied in both construction and detail.

## Claims

1. A method of operating a communications network in response to the usage by a calling entity of the communications network **characterised in that** the method comprises the initial steps of:
preparing a trait database (3) of call traits for calling entities;
dividing the calling entities into a plurality of classes of calling entity;
allocating each calling entity to at least one class of calling entity; and
preparing a calling entity database (1) of classes of calling entity;
and subsequently:
choosing from the entity database a class of calling entity (5) for monitoring;
choosing at least one of said call traits from the trait database (3) to provide a fingerprint (7) and thus a fingerprint template for the chosen class of calling entity;
compiling at least one control fingerprint template from control fingerprints (6) for the chosen class of calling entity;
establishing rules for comparison (8) between the control fingerprint (6) and an actual fingerprint (7);
using the fingerprint template to provide actual fingerprints (7) for each calling entity within the chosen class of calling entity (5) by recording the call trait of each calling entity within a predetermined period;
comparing (9) the actual fingerprint (7) of each calling entity against the control fingerprint (6);
determining whether the comparison between the actual and control fingerprints (7,6) establishes a similarity having regard to the rules for comparison (8);
preparing a set of similar calling entities based on the similarity established; and
carrying out an appropriate subsequent action when a similarity is established and a set of similar calling entities is provided.

2. A method as claimed in claim 1 in which the set of similar calling entities is entered into the entity database (1) as a class of calling entity (2) and steps according to the invention are carried out on this class of calling entity.

3. A method as claimed in claim 1 or 2, in which the following steps are carried out:
the control fingerprint (6) is downloaded to a query database;
the actual fingerprint (7) is downloaded to a buffer database;
the databases are compared for determination of similarity; and
the set of similar calling entities is stored on an action consequent database.

4. A method as claimed in claim 3, in which the query, buffer and action consequent databases are stored off-line for subsequent processing.

5. A method as claimed in any preceding claim, in which the processing occurs in real time.

6. A method as claimed in any preceding claim, in which at least one of the classes of calling entity is based on one or more calling entity trait.

7. A method as claimed in claim 6, in which the calling entity trait is chosen from one or more of:
the calling entity demographics;
account payment history of the calling entity;
the length of time the calling entity has been connected to the communications system; and
whether the calling entity is linked to another calling entity by an identical or similar demographic.

8. A method as claimed in claim 6 or 7, in which the calling entity trait is re-recorded after some time interval and if the calling entity trait differs from the previously recorded calling entity trait the steps are performed of:
deleting the previously recorded calling entity trait;
deleting the calling entity from the class of calling entity previously allocated because of the previously recorded calling entity trait; and
re-allocating the calling entity to at least one class of calling entity for that new calling entity trait.

9. A method as claimed in any preceding claim, in which at least one of the classes of calling entity (2) is based on one or more call traits previously recorded for the calling entities forming that class of calling entity.

10. A method as claimed in claim 9, in which the call trait is chosen from one or more of:-
B number;
prefix;
value;
length;
interval since last call;
operator ID;
fail codes;
zone;
call ID;
calling line identity;
a sub type;
b sub type; and
excluded calls.

11. A method as claimed in claim 9 or 10, in which, when a new fingerprint (7) is recorded for a calling entity and if the call trait recorded in that fingerprint (7) differs from the previously recorded call trait, the steps are performed of:-
substituting the new call trait recorded for the previously recorded call trait;
deleting the call entity from the class of calling entity previously allocated to because of said previously recorded call trait; and
re-allocating the call entity to at least one class of calling entity for that new call trait.

12. A method as claimed in any preceding claim, in which the control fingerprint (6) is chosen by recording the call traits of another calling entity.

13. A method as claimed in any preceding claim, in which the control fingerprint (6) is chosen by recording the call traits of a plurality of other calling entities and averaging each call trait to provide a control call trait for the control fingerprint.

14. A method as claimed in any preceding claim, in which a unique control fingerprint (6) is chosen for each call entity, said control fingerprint (6) being an actual fingerprint (7) previously recorded for the same call entity.

15. A method as claimed in any preceding claim, in which the control fingerprint is chosen by an arbitrary selection of the call trait.

16. A method as claimed in any preceding claim, in which the appropriate subsequent operation comprises preventing the calling entity from using the communications network to connect with specified calling entities.

17. A method as claimed in any of claims 1 to 15, in which the appropriate subsequent operation comprises preventing the calling entity from using the communications network to connect with any other calling entity.

18. A method as claimed in any preceding claim, in which the appropriate subsequent operation comprises downloading messages to the calling entity.

## Patentansprüche

1. Verfahren zum Betrieb eines Kommunikationsnetzes als Reaktion auf die Benutzung durch eine anrufende Entität des Kommunikationsnetzes, **dadurch gekennzeichnet, dass** das Verfahren folgende anfängliche Schritte umfasst:
Erstellen einer Merkmalsdatenbank (3) von Anrufsmerkmalen für anrufende Entitäten;
Unterteilen der anrufenden Entitäten in eine Vielzahl von Klassen von anrufenden Entitäten;
Zuweisen jeder anrufenden Entität zu mindestens einer Klasse von anrufenden Entitäten; und
Erstellen einer Datenbank von anrufenden Entitäten (1) von Klassen von anrufenden Entitäten;
und nachfolgend:
Auswählen einer Klasse von anrufenden Entitäten (5) aus der Entitätendatenbank zur Überwachung;
Auswählen mindestens eines der Anrufsmerkmale aus der Merkmalsdatenbank (3), um einen Fingerabdruck (7) und damit eine Fingerabdruckvorlage für die gewählte Klasse von anrufenden Entitäten bereitzustellen;
Zusammenstellen mindestens einer Kontrollfingerabdruckvorlage aus Kontrollfingerabdrücken (6) für die gewählte Klasse von anrufenden Entitäten;
Aufstellen von Regeln für einen Vergleich (8) zwischen dem Kontrollfingerabdruck (6) und einem tatsächlichen Fingerabdruck (7); Verwenden der Fingerabdruckvorlage zur Bereitstellung von tatsächlichen Fingerabdrücken (7) für jede anrufende Entität innerhalb der gewählten Klasse von anrufenden Entitäten (5) durch Aufzeichnen des Anrufmerkmals jeder anrufenden Entität innerhalb eines vorherbestimmten Zeitraums;
Vergleichen (9) des tatsächlichen Fingerabdrucks (7) jeder anrufenden Entität mit dem Kontrollfingerabdruck (6);
Ermitteln, ob der Vergleich zwischen dem tatsächlichen und dem Kontrollfingerabdruck (7, 6) hinsichtlich der Regeln zum Vergleich (8) eine Ähnlichkeit ergibt;
Erstellen eines Satzes von ähnlichen anrufenden Entitäten auf der Grundlage der festgestellen Ähnlichkeit; und
Ausführen einer angemessenen nachfolgenden Handlung, wenn eine Ähnlichkeit festgestellt und ein Satz von ähnlichen anrufenden Entitäten bereitgestellt wurde.

2. Verfahren nach Anspruch 1, bei dem der Satz von ähnlichen anrufenden Entitäten als Klasse von anrufenden Entitäten (2) in die Entitätendatenbank (1) eingegeben wird und Schritte gemäß der Erfindung in dieser Klasse von anrufenden Entitäten ausgeführt werden.

3. Verfahren nach Anspruch 1 oder 2, bei dem die folgenden Schritte ausgeführt werden:
der Kontrollfingerabdruck (6) wird in eine Abfragedatenbank geladen;
der tatsächliche Fingerabdruck (7) wird in eine Pufferdatenbank geladen;
die Datenbanken werden zur Ermittlung einer Ähnlichkeit verglichen; und
der Satz von ähnlichen anrufenden Entitäten wird in einer Handlungskonsequenzdatenbank gespeichert.

4. Verfahren nach Anspruch 3, bei dem die Abfrage-, Puffer- und Handlungskonsequenzdatenbank zur nachfolgenden Verarbeitung Off-Line gespeichert werden.

5. Verfahren nach einem der vorhergehenden Ansprüche, bei dem die Verarbeitung in Echtzeit stattfindet.

6. Verfahren nach einem der vorhergehenden Ansprüche, bei dem mindestens eine der Klassen von anrufenden Entitäten auf einem oder mehreren Merkmalen der anrufenden Entität beruht.

7. Verfahren nach Anspruch 6, bei dem das Merkmal der anrufenden Entität aus einem oder mehreren der folgenden Punkte ausgewählt wird:
den demografischen Merkmalen der anrufenden Entität;
dem Kontozahlungsverlauf der anrufenden Entität;
der Zeitspanne, für die die anrufende Entität mit dem Kommunikationssystem verbunden war; und
ob die anrufende Entität durch ein identisches oder ähnliches demografisches Merkmal mit einer anderen anrufenden Entität verbunden ist.

8. Verfahren nach Anspruch 6 oder 7, bei dem das Merkmal der anrufenden Entität nach einem gewissen Zeitintervall aufgezeichnet wird und, falls sich das Merkmal der anrufenden Entität von dem zuvor aufgezeichneten Merkmal der anrufenden Entität unterscheidet, folgende Schritte ausgeführt werden:
Löschen des zuvor aufgezeichneten Merkmals der anrufenden Entität; Löschen der anrufenden Entität aus der Klasse von anrufenden Entitäten, der sie aufgrund des zuvor aufgezeichneten Merkmals der anrufenden Entität zuvor zugewiesen worden war; und
Neuzuweisen der anrufenden Entität zu mindestens einer Klasse von anrufenden Entitäten für das neue Merkmal der anrufenden Entität.

9. Verfahren nach einem der vorhergehenden Ansprüche, bei dem mindestens eine der Klassen von anrufenden Entitäten (2) auf einem oder mehreren Anrufmerkmalen beruht, die zuvor für die anrufenden Entitäten aufgezeichnet worden waren, die diese Klasse von anrufenden Entitäten bilden.

10. Verfahren nach Anspruch 9, wobei das Anrufmerkmal aus einem oder mehreren der folgenden Merkmale ausgewählt wird:
B-Nummer;
Vorwahl;
Wert;
Länge;
Zeitintervall seit dem letzten Anruf;
Operator-ID;
Fehlercodes;
Zone;
Anruf-ID;
Identität der anrufenden Leitung;
a-Untertyp;
b-Untertyp; und
ausgeschlossene Anrufe.

11. Verfahren nach Anspruch 9 oder 10, bei dem, wenn ein neuer Fingerabdruck (7) für eine anrufende Entität aufgezeichnet wird und wenn sich das Anrufmerkmal, das in dem Fingerabdruck (7) aufgezeichnet ist, von dem zuvor aufgezeichneten Anrufmerkmal unterscheidet, folgende Schritte ausgeführt werden:
Ersetzen des zuvor aufgezeichneten Anrufmerkmals durch das neue aufgezeichnete Anrufmerkmal;
Löschen der Anrufentität aus der Klasse von anrufenden Entitäten, der sie aufgrund des zuvor aufgezeichneten Anrufmerkmals zuvor zugewiesen worden war; und
Neuzuweisen der anrufenden Entität zu mindestens einer Klasse von anrufenden Entitäten für das neue Anrufmerkmal.

12. Verfahren nach einem der vorhergehenden Ansprüche, bei dem der Kontrollfingerabdruck (6) ausgewählt wird, indem die Anrufmerkmale einer anderen anrufenden Entität aufgezeichnet werden.

13. Verfahren nach einem der vorhergehenden Ansprüche, wobei der Kontrollfingerabdruck (6) ausgewählt wird, indem die Anrufmerkmale einer Vielzahl von anderen anrufenden Entitäten aufgezeichnet und aus jedem Anrufmerkmal der Durchschnitt gebildet wird, um ein Kontrollanrufmerkmal für den Kontrollfingerabdruck bereitzustellen.

14. Verfahren nach einem der vorhergehenden Ansprüche, bei dem ein eindeutiger Kontrollfingerabdruck (6) für jede Anrufentität gewählt wird, wobei der Kontrollfingerabdruck (6) ein tatsächlicher Fingerabdruck (7) ist, der zuvor für dieselbe Anrufentität aufgezeichnet wurde.

15. Verfahren nach einem der vorhergehenden Ansprüche, bei dem der Kontrollfingerabdruck durch eine willkürliche Auswahl des Anrufmerkmals gewählt wird.

16. Verfahren nach einem der vorhergehenden Ansprüche, bei dem der angemessene nachfolgende Vorgang umfasst, zu verhindern, dass die anrufende Entität das Kommunikationsnetz zur Verbindung mit spezifizierten anrufenden Entitäten verwendet.

17. Verfahren nach einem der Ansprüche 1 bis 15, bei dem der angemessene nachfolgende Vorgang umfasst, zu verhindern, dass die anrufende Entität das Kommunikationsnetz zur Verbindung mit irgendeiner anderen anrufenden Entität verwendet.

18. Verfahren nach einem der vorhergehenden Ansprüche, bei dem der angemessene nachfolgende Vorgang das Laden von Mitteilungen zu der anrufenden Entität umfasst.

## Revendications

1. Un procédé d'exploitation d'un réseau de communication en réponse à l'utilisation par une entité appelante du réseau de communication **caractérisé en ce que** le procédé comprend les opérations initiales suivantes :
la préparation d'une base de données de traits (3) de traits d'appels pour les entités appelantes,
la division des entités appelantes en une pluralité de classes d'entités appelantes,
l'attribution de chaque entité appelante à au moins une classe d'entités appelantes, et
la préparation d'une base de données d'entités appelantes (1) de classes
d'entités appelantes,
et subséquemment :
le choix dans la base de données d'entités d'une classe d'entités appelantes (5) destinée à être surveillée,
le choix d'au moins un desdites traits d'appels dans la base de données de traits (3) afin de fournir une empreinte digitale (7) et, en conséquence, un gabarit d'empreinte digitale pour la classe d'entités appelantes choisie,
l'élaboration d'au moins un gabarit d'empreinte digitale de contrôle à partir des empreintes digitales de contrôle (6) pour la classe d'entités appelantes choisie,
l'établissement de règles destinées à effectuer une comparaison (8) entre l'empreinte digitale de contrôle (6) et une empreinte digitale réelle (7),
l'utilisation du gabarit d'empreinte digitale afin de fournir des empreintes digitales réelles (7) pour chaque entité appelante à l'intérieur de la classe d'entités appelantes choisie (5) en enregistrant le trait d'appel de chaque entité appelante au cours d'une période de temps prédéterminée,
la comparaison (9) de l'empreinte digitale réelle (7) de chaque entité appelante avec l'empreinte digitale de contrôle (6),
la détermination si la comparaison entre l'empreinte digitale réelle et l'empreinte digitale de contrôle (7, 6) établit une similarité compte tenu des règles de comparaison (8),
la préparation d'un ensemble d'entités appelantes similaires basé sur la similarité établie, et
l'exécution d'une action subséquente appropriée lorsqu'une similarité est établie et qu'un ensemble d'entités appelantes similaires est fourni.

2. Un procédé selon la Revendication 1, où l'ensemble d'entités appelantes similaires est entré dans la base de données d'entités (1) sous la forme d'une classe d'entités appelantes (2) et où des opérations selon l'invention sont exécutées sur cette classe d'entités appelantes.

3. Un procédé selon la Revendication 1 ou 2, où les opérations suivantes sont exécutées :
l'empreinte digitale de contrôle (6) est téléchargée vers une base de données de requêtes,
l'empreinte digitale réelle (7) est téléchargée vers une base de données de mémoire tampon,
les bases de données sont comparées afin de déterminer une similarité, et
l'ensemble des entités appelantes similaires est placée en mémoire dans une base de données d'actions subséquentes.

4. Un procédé selon la Revendication 3, où les bases de données de requêtes, de mémoire tampon et d'actions subséquentes sont conservées hors ligne pour un traitement subséquent.

5. Un procédé selon l'une quelconque des Revendications précédentes, où le traitement s'effectue en temps réel.

6. Un procédé selon l'une quelconque des Revendications précédentes, où au moins une des classes d'entités appelantes est basée sur un ou plusieurs traits d'entité appelante.

7. Un procédé selon la Revendication 6, où le trait d'entité appelante est choisi parmi un ou plusieurs des traits suivants :
les données démographiques de l'entité appelante,
l'historique des paiements du compte de l'entité appelante,
la durée pendant laquelle l'entité appelante a été connectée au système de communication, et
le fait que l'entité appelante est reliée à une autre entité appelante par une donnée démographique identique ou similaire.

8. Un procédé selon la Revendication 6 ou 7, où le trait d'entité appelante est enregistré à nouveau après un délai donné et si le trait d'entité appelante diffère du trait d'entité appelante enregistré antérieurement, les opérations suivantes sont exécutées :
la suppression du trait d'entité appelante enregistré antérieurement,
la suppression de l'entité appelante de la classe d'entités appelantes à laquelle elle était attribuée antérieurement du fait du trait d'entité appelante enregistré antérieurement, et
la réattribution de l'entité appelante à au moins une classe d'entités appelantes pour ce nouveau trait d'entité appelante.

9. Un procédé selon l'une quelconque des Revendications précédentes, où au moins une des classes d'entités appelantes (2) est basée sur un ou plusieurs traits d'appel enregistrés antérieurement pour les entités appelantes formant cette classe d'entités appelantes.

10. Un procédé selon la Revendication 9, où le trait d'appel est choisi parmi un ou plusieurs des traits suivants :
numéro B,
préfixe,
valeur,
longueur,
temps écoulé depuis le dernier appel,
identifiant de l'opérateur,
codes d'échec,
zone,
identifiant de l'appel,
identité de la ligne appelante,
sous-type a,
sous-type b, et
appels exclus.

11. Un procédé selon la Revendication 9 ou 10, où, lorsqu'une nouvelle empreinte digitale (7) est enregistrée pour une entité appelante et si le trait d'appel enregistré dans cette empreinte digitale (7) diffère du trait d'appel enregistré antérieurement, les opérations suivantes sont exécutées :
le remplacement du trait d'appel enregistré antérieurement par le nouveau trait d'appel enregistré
la suppression de l'entité appelante de la classe d'entités appelantes à laquelle elle était attribuée antérieurement du fait dudit trait d'appel enregistré antérieurement, et
la réattribution de l'entité appelante à au moins une classe d'entités appelantes pour ce nouveau trait d'appel.

12. Un procédé selon l'une quelconque des Revendications précédentes, où l'empreinte digitale de contrôle (6) est choisie en enregistrant les traits d'appel d'une autre entité appelante.

13. Un procédé selon l'une quelconque des Revendications précédentes, où l'empreinte digitale de contrôle (6) est choisie en enregistrant les traits d'appel d'une pluralité d'autres entités appelantes et en calculant la moyenne de chaque trait d'appel afin de fournir un trait d'appel de contrôle pour l'empreinte digitale de contrôle.

14. Un procédé selon l'une quelconque des Revendications précédentes, où une empreinte digitale de contrôle unique (6) est choisie pour chaque entité appelante, ladite empreinte digitale de contrôle (6) étant une empreinte digitale réelle (7) enregistrée antérieurement pour la même entité appelante.

15. Un procédé selon l'une quelconque des Revendications précédentes, où l'empreinte digitale de contrôle est choisie par une sélection arbitraire du trait d'appel.

16. Un procédé selon l'une quelconque des Revendications précédentes, où l'opération subséquente appropriée comprend le fait d'empêcher l'entité appelante d'utiliser le réseau de communication pour se connecter à des entités appelantes données.

17. Un procédé selon l'une quelconque des Revendications 1 à 15, où l'opération subséquente appropriée comprend le fait d'empêcher l'entité appelante d'utiliser le réseau de communication pour se connecter à toute autre entité appelante.

18. Un procédé selon l'une quelconque des Revendications précédentes, où l'opération subséquente appropriée comprend le téléchargement de messages vers l'entité appelante.
